# NEUE EUROPÄISCHE PATENTSCHRIFT

(11) **EP 0 262 092 B2**
(45) Veröffentlichungstag und Bekanntmachung des Hinweises auf die Entscheidung über den Einspruch: **01.09.1999**
(45) Hinweis auf die Patenterteilung: 06.03.1991
(21) Anmeldenummer: 87810534.5
(22) Anmeldetag: 16.09.1987
(51) Int. Cl.: B32B 5/28, B60R 13/08

(54) **Lärmminderndes Bauelement**
Noise-reducing building element
Elément de construction réduisant le bruit

(30) Priorität: 26.09.1986 CH 386786
(43) Veröffentlichungstag der Anmeldung: 30.03.1988
(73) Patentinhaber: RIETER AUTOMOTIVE (INTERNATIONAL) AG, 8702 Zollikon (CH)
(72) Erfinder: Lucca, Eusebio, I-13100 Vercelli (IT); Rohrer, Paul, CH-8704 Herrliberg (CH)
(74) Vertreter: Ritscher, Thomas, Dr.

(56) Entgegenhaltungen:
- EP-A- 0 056 796
- EP-A- 0 095 582
- EP-A- 0 095 752
- EP-A- 0 198 493
- DE-A- 1 609 413
- DE-A- 2 161 674
- DE-A- 2 545 700
- DE-A- 2 608 392
- DE-A- 2 924 197
- DE-A- 3 148 710
- DE-A- 3 215 244
- DE-A- 3 507 893
- DE-U- 8 211 797
- FR-A- 2 126 995
- FR-A- 2 368 111
- FR-A- 2 383 782
- FR-A- 2 480 181
- GB-A- 2 096 943
- US-A- 3 068 043
- US-A- 3 620 935
- US-A- 4 056 161
- US-A- 4 131 664
- 'Schallschutz durch Kapselung', VDI-Richtlinien, VDI 2711, Juni 1978, S. 3,10,11
- 'Neue Technologien und Materialien zum Schallschutz', VDI-Berichte Nr. 437 (1982)
- 'kurz und bündig' Technik, I. vor Veit, techn. Akustik, Vogel-Verlag (1977)
- Encyclopedia of Polymer Science and Engineering, Band 3 (1985), S. 46
- Ullmann's Encyklopädie der technischen Chemie, Band 23 (1983), S. 521-525
- M.M. Schwartz, 'Composite Materials Handbook', MacGraw-Hill (1984), S. 4.4 - 4.6, 4.12 - 4.15

## Beschreibung

Die vorliegende Erfindung betrifft ein lärmminderndes Bauelement gemäss dem Oberbegriff den Anspruchs 1 sowie deie Verwendung eines solchen Bauelements gemäß Anspruch 16.

Bauelemente, die zur passiven Lärmbekämpfung durch Schal labsorption oder Schalldämmung vorgesehen sind, sind in vielen Ausführungsformen bekannt. Eine erste Gruppe dieser Bauelemente sind Schallschirme, die gewöhnlich aus einem Fasermaterial bestehen und in einem Halterahmen in grossen Räumen aufgehängt werden. Eine zweite Gruppe umfasst alle Arten von Verkapselungen für Lärmquellen und Verkleidungen für Innenräume, die ebenfalls überwiegend aus Fasermaterial bestehen und als Beschichtung auf eine tragende Fläche aufgetragen oder als plattenförmige Schicht an einer tragenden Fläche befestigt sind.

Die Schallschirme sind in der Mehrzahl ebene oder nur schwach gekrümmte Gebilde, deren Ober- bzw. Aussenflächen nicht zusätzlich bearbeitet sind, und die Verkapselungen können einfacherweise aus solchen Gebilden zusammengesetzt werden.Im Unterschied dazu weisen Verkleidungen für Innenräume auf ihrer sichtbaren Aussenseite fast immer eine Dekorschicht auf, und die Verkleidung für Fahrzeugkabinen und insbesondere für Automobile können darüber hinaus auf der zum ganzflächigen Anlegen an die tragende Fläche der Karosserie vorgesehenen Oberfläche reliefartig verformt sein.

Ein Ausführungsbeispiel einer schallabsorbierenden und dekorativen Innenverkleidung für eine Fahrzeugkarosserie ist in der US-Patentschrift 4'131'664 gezeigt. Diese Verkleidung besteht aus zwei Fasermatten mit einer dazwischenliegenden, luftdichten Folie, wovon die eine Fasermatte verdichtet ist und vorzugsweise eine zum ganzflächigen Anlegen an die zu verkleidende Wand geeignete, reliefartig verformte Aussenfläche aufweist, während auf der unverformten Aussenfläche der nicht verdichteten Matte eine Dekorschicht angeordnet sein kann. Zur Herstellung dieser Verkleidung werden die beiden Fasermatten, zwischen deren Fasern ein feinkörniges Bindemittel eingelagert ist mitsamt der dazwischenliegenden Folie in eine heizbare Form eingebracht. Nach dem Schliessen der Form wird durch Kanäle in der einen Formhälfte Druckluft in das Formnest eingeleitet, welche Druckluft durch die eine Matte auf die luftdichte Folie wirkt und diese mitsamt der anderen Matte gegen die reliefartig ausgebildete Innenwand der anderen Formhälfte drückt. Nach dem Aushärten des Bindemittels kann die Verkleidung mit einer unverdichteten und einer verdichteten und auf ihrer Aussenfläche reliefartig ausgeformten Schicht aus der Form entnommen werden.

Aus der FR-A- 2383782 ist ein schallisolierendes Bauelement bekannt, welches mindestens zwei, aus vesredenen Materialie, bestehende Schichten umfasst. Drafges Bauelement entspricht beim Oberbegriff des Anspruchs 1.

Keines der bisher bekannten schallabsorbierenden Bauelement ist steif und selbsttragend und kann ohne einen Tragrahmen oder eine ganzflächig haltende Auflage bzw. Rückwand verwendet werden.

Der vorliegenden Erfindung lag darum die Aufgabe zugrunde, ein lärmminderndes, dekoratives Bauelement zu schaffen, das ohne Tragrahmen oder Haltewand seine Funktion erfüllt.

Diese Aufgabe wird erfindungsgemäss mit einem Bauelement gelöst, welches die Merkmale des kennzlichnenden Teils des Anspruchs 1 aufweist.

Bevorzugte Ausfuhragen des lärmmindernlen Bauelements sind den abhängigen Ansprüchen zu entnehmen. Das erfindungsgemässe Bauelement kann wegen der formhaltenden Trägerschicht als Schallschirm ohne Tragrahmen verwendet werden und weist auch genügend Druck-, Blege- und Knickfestigkeit auf, um als schallabsorbierendes und -dämmendes Karosserieteil ohne tragende Fläche verwendet zu werden, beispielsweise in einer modernen Kunststoffkarosserie für Kraftfahrzeuge, als Motorabdeckung im LKW, zur Maschineneinkapselung etc. Dadurch können das Gewicht der Gesamtkonstruktion beträchtlich gesenkt und die Montage bedeutend vereinfacht und verbilligt werden.

Bei einem bevorzugten Verfahren zum Herstellen des erfindungsgemässen Bauelements in einer heiz- und kühlbaren, zweiteiligen Formpresse und in einem Arbeitsgang wird ein aus mindestens zwei Schichten bestehender Stapel in die offene Formpresse eingelegt ; beim Schliessen der Formpresse verdichtet und durch Einleiten von Druckgas in das Formnest und im Bereich der ersten Schicht die zweite Schicht gegen die benachbarte Formwand gedrückt und die-beiden Schichten durch Wärmezufuhr und/oder -ableitung durch die Formteile verfestigt und dauerhaft miteinander verbunden.

Um die Verbindung der beiden Schichten zu verbessern wird bei einer bevorzugten Ausführungsart dieses Verfahrens zwischen die beiden Schichten ein heissiegelfähiges Material eingelegt.

Nachfolgend werden einige Ausführungsbeispiele des erfindungsgemässen Bauteils und das bevorzugte Verfahren zu deren Herstellung mit Hilfe der Figuren beschrieben. Es zeigen :
Fig. 1 den Schnitt durch einen Teil eines einfachen zweischichtigen Bauelements,
Fig. 2 den Schnitt durch einen Teil eines mehrschichtigen Bauelements.
Fig. 3 den vertikalen Schnitt durch eine Ausführungsform, die als integrale LKW-Motorhaube vorgesehen ist und
Fig. 4 die perspektivische Ansicht einer Ausführungsform, die als Trennwand zwischen Motorraum und Wasserkasten eines PKW eingebaut ist.

Die Dicken der verschiedenen Schichten der in den Figuren gezeigten Bauelementteile sind der deutlicheren Darstellung wegen nicht massstäblich gezeichnet.

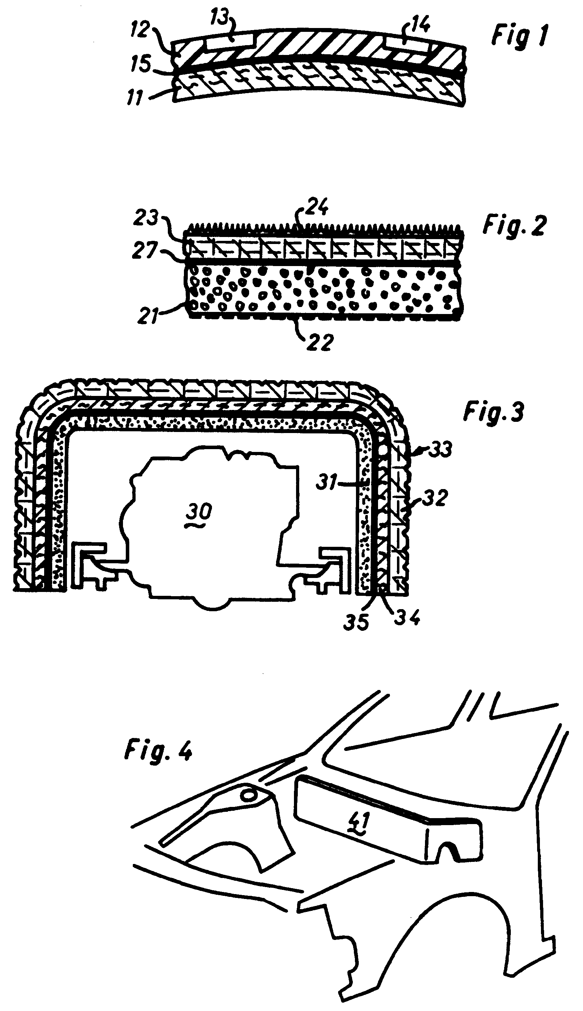

Der in Fig. 1 schematisch und im Schnitt gezeigte Teil einer einfachen Ausführungsform des erfindungsgemässen Bauelements ist schwach gewölbt und enthält nur zwei Schichten, eine Polsterschicht 11 und eine Trägerschicht 12. Die Aussenfläche der Trägerschicht 12 weist zwei Einsenkungen 13, 14 auf, die zum verschiebungsfreien Anlegen des Bauelements an einer strukturierten Fläche vorgesehen sind. Die schallabsorbierende und wärmeisolierende Polsterschicht besteht aus einer porösen Fasermatte aus natürlichen Fasern, die an den Ueberkreuzungen und Berührungsstellen mit einem eingestreuten, feinkörnigen Thermoplast verbunden sind. Die schalldämmende, formhaltende Trägerschicht ist eine massive Platte aus einem thermoformbaren Kunststoffmaterial. Beide Schichten wurden während dem noch zu beschreibenden Herstellverfahren in einer heizbaren Formpresse bei erhöhter Temperatur durch Erweichen des Materials der Schichten mindestens im Bereich der sich berührenden Flächen mindestens teilweise miteinander verbunden. Zum Verbessern dieser Verbindung kann wahlweise auch eine heisssiegelfähige Folie (15) zwischen den Schichten angeordnet sein.

Die Fig. 2 zeigt ebenfalls schematisch den Schnitt durch einen Teil einer perfektionierten Ausführungsform des erfindungsgemässen Bauelements. Bei dieser Ausführungsform ist die Aussenfläche der Polsterschicht 21 mit einer Dekorschicht 22 abgedeckt und die Trägerschicht 23 auf der Aussenfläche mit einem Teppich 24 versehen. Zwischen der Polsterschicht und der Trägerschicht ist eine Klebschicht 27 eingelegt. Die schallabsorbierende und wärmedämmende Polsterschicht besteht aus einem thermoplastisch gebundenen Faservlies. Die Trägerschicht besteht aus einen mineralischen Füllstoff enthaltenden Polypropylen, mit welchem der Teppich fest verbunden ist. Die auf der Aussenseite der Polsterschicht aufgeschmolzene Dekorschicht ist ein mikroporöses, imprägniertes Kunstfaservlies. Als Klebschicht zwischen der Polsterschicht und der Trägerschicht wird eine dünne, heisssiegelfähige Folie verwendet,

Fig. 3 (kein Gegenstand der vorliegenden Ansprüche) zeigt schematisch einen vertikalen Schnitt durch eine Ausführungsform, welche als integrale Motorhaube für einen LKW ausgebildet ist. Die der Geräuschquelle, d.h. dem Motor 30 zugekehrte Polsterschicht (31) ist aus offenzelligem Polyurethanschaum geformt und mittels eines Klebefilms (35) mit einer Trägerscht verbunden. Die steife Trägerschicht besteht aus einer Lage glasfaserverstärktem duroplastischem Material (32) und einer Lage verdichtetem duroplastischem Mischfaservlies (34). Die erstgenannte, äussere Lage weist an ihrer Aussenseite eine dekorative Prägung (33) auf.

Fig. 4 zeigt schematisch den Einbau eines als steife Trennwand (41) verwendeten Bauelements, das anstelle einer Blechwand und einer schallabsorbierenden Verkleidung zwischen Motorraum und Wasserkasten eines Personenwagens verwendet wird. Bei dieser Verwendung ist die Polsterschicht motorseitig angeordnet und die Trägerschicht wasserkastenseitig. Die Polsterschicht ist als Faservlies ausgebildet und wasser-, öl- und benzinabweisend ausgerüstet. Die Trägerschicht besteht aus vulkanisiertem, synthetischem Kautschuk mit mineralischem Füllstoff, ist vollkommen wasserundurchlässig und wirkt schalldämmend.

Es versteht sich, dass die vier gezeigten und beschriebenen Ausführungsformen des erfindungsgemässen Bauelements auf vielerlei Weise modifiziert und an spezielle Anforderungen angepasst werden können. Beispielsweise sollte ein als Schallschirm zu verwendendes Bauelement, für das nur geringe mechanische Stabilität, aber eine gute Schallabsorption gefordert sind, eine relativ dünne Trägerschicht und eine vergleichsweise dicke Polsterschicht aufweisen. Umgekehrt sollte ein als tragendes Teil einer Fahrzeugkarosserie vorgesehenes Bauelement eine relativ dicke und gegebenenfalls auch mehrlagige Trägerschicht aufweisen, während die Dicke der Polsterschicht entsprechend der erforderlichen Schallabsorption zu bemessen ist. Bei praktisch erprobten Ausführungs formen des Bauelements beträgt die Dicke der Trägerschicht 1-10 mm, die der Polsterschicht 5-50 mm. Es versteht sich weiter, dass zwischen jede Schicht oder die einzelnen Lagen mehrlagiger Schichten als Klebstoff wirksame, heissiegelfähige Materialien eingelegt werden können und dass diese Materialien in Form eines feinkörnigen Pulvers eines Netzes oder einer Folie verwendet werden können.

Auch die für die schallabsorbierende und wärmeisolierende Polster- und die für die schälldammende, formhaltende Trägerschicht verwendeten Werkstoffe können an spezielle Anforderungen angepasst oder entsprechend den geforderten Abmessungen bzw. der Anzahl der Schichten optimiert werden. So kann die Fasermatte, die vorzugsweise eine niedrige Dichte von 5-150 kg/m³ aufweist, aus natürlichen oder synthetischen Fasern oder einem Gemisch aus natürlichen und synthetischen Fasern bestehen. Als Bindemittel für die Fasern kann beispielsweise ein thermisch härtendes Phenolharz oder Harnstoff-Formaldehyd oder ein thermoplastisches Polyolefinharz verwendet werden. Besonders günstig sind halbpolymerisierte Phenolformaldehyd-Harze vom Novolac-Typ. Bei der Verwendung von Bindefasern, die beim Erwärmen die Basisfasern aus höher schmelzendem Material an den Kreuzungs- oder Berührungsstellen miteinander verkleben oder -schmelzen, kann auch auf das Einstreuen eines weiteren Binders verzichtet werden. Für die Trägerschicht kann eine massive Platte aus einem thermoplastischen oder einem duroplastischen Material verwendet werden. Thermoplastisches Material kann mit einem mineralischen Füllstoff bis zu Dichten von beispielsweise 1,5 bis 2,5 kg/dm³ versetzt werden. Um die mechanische Festigkeit der Trägerschicht zu erhöhen, kann ausser dem bereits genannten mit 5 bis 40 G% Glasfasern verstärkten duroplastischen Material (SMC) auf der Basis ungesättigter Polyester, Epoxyd usw. auch ein mit eingelegten Glasfasern verstärktes thermoplastisches Material (GMT), beispielsweise Polyolefin, Polyamid, Polyester usw., verwendet werden. Schliesslich ist auch vulkanisierbarer Gummi als Trägerschicht geeignet.

Das erfindungsgemässe Bauelement wird vorzugsweise in einem Einschritt-Formpressverfahren hergestellt. Dazu wird eine zweiteilige Formpresse verwendet, deren beide Teile heiz-und kühlbar sind. Der eine Teil der Formpresse kann reliefartig ausgebildet sein und mindestens derandere Teil weist mehrere Kanäle auf, um Druckluft in das Formnest einzuleiten. Ein Formteil ist mit Schneidklingen bestückt, die beim Schliessen der Form überstehende Partien des in die Form gelegten Materials abschneiden.

Bei der Ausführung des Herstellverfahrens werden zuerst ausserhalb der Form die für das Bauelement vorgesehenen Schichten und/oder Lagen und/oder Folien zu einem Stapel aufeinandergelegt. Der Stapel wird dann in die Form eingelegt, wobei die gasdurchlässige Polsterschicht dem Formteil, der die Kanäle aufweist, und die massive Trägerschicht dem wahlweise reliefartig ausgebildeten Formteil benachbart angeordnet werden. Beim nachfolgenden Schliessen der Form werden seitlich überstehende Ränder des Stapels oder einzelner Schichten des Stapels abgeschnitten und wird die elastische Polsterschicht gegen die rigide Trägerschicht gepresst und dabei verdichtet. Anschliessend werden die beiden Formteile auf eine Temperatur erwärmt, bei der das Material der Trägerschicht erweicht, und es wird Druckluft in das Formnest eingeleitet, die durch die Polsterschicht auf die Trägerschicht einwirkt und die letztere gegen den benachbarten Formteil presst, wobei sich die verdichtete Polsterschicht entsprechend entspannt. Sobald die Verformung der Trägerschicht beendet ist und die andere Schicht bzw. anderen Schichten ausreichend erwärmt sind, um mindestens an den benachbarten Oberflächen zu verkleben, werden die Formteile gekühlt und nach dem Erhärten der einzelnen Schichten die Form geöffnet und das fertige Bauelement entnommen.

Bei richtiger Wahl der verwendeten Materialien und Bearbeitung der Forminnenflächen ist ein Nacharbeiten der Oberflächen und des Rands des Bauelements nicht erforderlich.

Eine Variante des beschriebenen Herstellverfahrens ist das Einlegen eines vorgängig erwärmten Stapels mit erweichten und mindestens teilweise verklebten Schichten in die vorgewärmte Form, die nach dem Schliessen und Verformen der Schichten gekühlt wird, um das formgepresste Bauelement zu verfestigen.

Es wird angenommen, dass das Einstellen der veränderlichen Parameter des Herstellverfahrens, insbesondere der Erwärmungstemperatur, der Ausformzeit und des Drucks der Druckluft, in Abhängigkeit von der Anzahl, den Abmessungen und der Anordnung der einzelnen Schichten sowie von dem für diese Schichten verwendeten Material, im Bereich fachmännischen Könnens liegt. Typische Werte sind etwa 150°-200° Erwärmungstemperatur, 1-5 min Ausformzeit und ein Luftdruck zwischen 1.5×10⁵ bis 20×10⁵ Pa (1,5 bis 20 bar) und vorzugsweise zwischen 3×10⁵ bis 12×10⁵ Pa (3 bis 12 bar).

Es versteht sich auch, dass der der Trägerschicht benachbarte Formteil vorzugsweise Kanäle aufweist, durch die die eingeschlossene Luft beim Andrücken der Trägerschicht entweichen kann. Weiter ist es möglich, dass ein Teil der Kanäle in dem der Polsterschicht benachbarten Formteil als Luftabzugskanäle verwendet wird, welche Abzugskanäle an eine Leitung mit einstellbarem Stömungswiderstand angeschlossen sind, was das Einstellen des Arbeitsdrucks bei kontinuierlich durch das Formnest strömender Druckluft ermöglicht. Schliesslich ist es auch möglich, auf die Einleitung von Druckluft in das Formnest zu verzichten und statt dessen in der porösen Polsterschicht oder auch der Trägerschicht eine Substanz zu verteilen, die sich bei der Arbeitstemperatur verdampft, reagiert oder sich zersetzt und dabei ausreichend Gas freisetzt, um den erforderlichen Druck im Formnest aufzubauen.

## Patentansprüche

1. Lärmminderndes Bauelement mit mindestens einer ersten schallabsorbierenden und wärmeisolierenden Schicht (11) und einer zweiten schalldämmenden Trägerschicht (12), welche beiden Schichten mit ihren benachbarten Oberflächen mindestens bereichsweise miteinander verbunden sind, dadurch gekennzeichnet, dass die zweite Schicht (12) aus einem steifen, undurchlässigen, thermoverformten, synthetischen Material besteht, so dass das Bauelement ohne Tragrahmen oder Haltewand verwendet werden kann, wobei die zweite Schicht (12) eine massive Platte aus einem mineralischen Füllstoff enthaltenden Polypropylen, aus vulkanisiertem, synthetischem Kautschuk mit mineralischem Füllstoff, oder auf einer Lage glasfaserverstärktem duroplastischem Material (32) und einer Lage verdichtetem duroplastischem Mischfaservlies (34) ist, und die erste schallabsorbierende und wärmeisolierende Schicht eine thermoverformte Fasermatte ist,
*oder wobei die zweite Schicht (12) eine massive Platte aus thermoformbarem Kunststoffmaterial und die erste schallabsorbierende und wärmeisolierende Schicht eine thermoverformte, poröse Fasermatte aus natürlichen Fasern ist.*

2. Bauelement nach Anspruch 1, weiter gekennzeichnet durch eine zwischen der ersten und der zweiten Schicht (11 bzw. 12) angeordnete, heissiegelfähige Klebstoffschicht (15).

3. Bauelement nach Anspruch 1, dadurch gekennzeichnet, dass die erste Schicht (11) eine thermoverformte Fasermatte ist.

4. Bauelement nach Anspruch 3, dadurch gekennzeichnet, dass die zweite Schicht (12) ein mit Glasfasern verstärktes Kunststoffmaterial ist.

5. Bauelement nach Anspruch 3, dadurch gekennzeichnet, dass die erste Schicht (11) eine mindestens teilweise mit thermoplastischem Bindemittel in Faser- oder Pulverform gebundene Synthese- und/oder Naturfasermatte ist und die zweite Schicht (12) aus einem mit Glasfasern und vorzugsweise Endlosglasfasern verstärkten Thermoplasten, beispielsweise auf der Basis von Polypropylen, Polyamid oder Polyester besteht.

6. Bauelement nach Anspruch 3, dadurch gekennzeichnet, dass die zweite Schicht (12) aus einem thermoplastischen Material und einem mineralischen Füllstoff besteht und eine Dichte zwischen 1,5 bis 2,5 kg/l aufweist.

7. Bauelement nach Anspruch 1, dadurch gekennzeichnet, dass auf der Aussenseite der ersten Schicht (21) eine poröse oder mikroporöse Dekorschicht (22) angeordnet und fest mit dieser verbunden ist.

8. Bauelement nach Anspruch 1, dadurch gekennzeichnet, dass die zweite Schicht (12) auf ihrer Aussenseite Ausnehmungen (13, 14) aufweist.

9. Bauelement nach Anspruch 8, dadurch gekennzeichnet, dass die zweite Schicht (23) eine als thermoverformter Teppich ausgebildete Dekorschicht (24) aufweist.

10. Bauelement nach Anspruch 1, dadurch gekennzeichnet, dass die zweite Schicht (12) ein duroplastisches, vernetztes Material enthält,

11. Bauelement nach Anspruch 5, dadurch gekennzeichnet, dass das mit Glasfasern verstärkte Material der zweiten Schicht (12) ein ausgehärteter sheet moulding compound (SMC), vorzugsweise auf der Basis eines ungesättigten Polyester, Epoxy oder dergleichen ist.

12. Bauelement nach Anspruch 10, dadurch gekennzeichnet, dass die zweite Schicht (32, 34) mindestens eine Lage eines gebundenen Fasermaterials (34) enthält.

13. Bauelement nach Anspruch 1, dadurch gekennzeichnet, dass die zweite Schicht (12) aus vulkanisiertem Gummi besteht.

14. Bauelement nach Anspruch 3, dadurch gekennzeichnet, dass die Fasermatte der ersten Schicht (11) aus synthetischen und/oder natürlichen Fasern gebildet ist, die mit einem duroplastischen, vernetzten Binder, z.B. einem Phenolharz, Harnstoffhart, Melaminharz, Epoxidharz oder deren Mischung gebunden sind.

15. Verwendung des Bauelements nach Anspruch 1 als formstabile, lärmmindernde Wand, Abschirmung oder Kapsel, vorzugsweise für ein Automobil.

## Claims

1. Noise-reducing component with at least one first sound-absorbing and heat-insulating layer (11) and a second sound-deadening carrier layer (12), both layers being connected with each other with their adjacent surfaces, at least in areas, characterised in that the second layer (12) consists of a rigid, impermeable, thermo-formed, synthetic material so that the component can be used without a supporting frame or retaining wall, wherein the second layer (12) is a solid plate consisting of polypropylene, which contains a mineral filling material, vulcanized, synthetic rubber with mineral filling material, or a layer of glass fibre-reinforced duroplastic material (32) and a layer of compressed duroplastic mixed fibre fleece (34), and the first sound-absorbing and heat-insulating layer is a thermo-formed fibrous matting, or wherein the second layer (12) is a solid plate consisting of thermo-formable plastics material and the first sound-absorbing and heat-insulating layer is a thermo-formed, porous fibrous matting of natural fibres.

2. Component according to claim 1, further characterised by a heat-sealing adhesive layer (15) which is arranged between the first and the second layer (11 and 12 respectively).

3. Component according to claim 1, characterised in that the first layer (11) is a thermo-formed fibrous matting.

4. Component according to claim 3, characterised in that the second layer (12) is a plastics material which is reinforced with glass fibres.

5. Component according to claim 3, characterised in that the first layer (11) is a synthetic and/or natural fibrous matting which is bound at least in part with thermoplastic binding material in fibrous or powder form and the second layer (12) consists of a thermoplastic reinforced with glass fibres, preferably continuous glass fibres, which is, for example, polypropylene-, polyamide-, or polyester-based.

6. Component according to claim 3, characterised in that the second layer (12) consists of a thermoplastic material and a mineral filling material and has a density of between 1.5 to 2.5 kg/l.

7. Component according to claim 1, characterised in that a porous or micro-porous decorative layer (22) is arranged on the outside of the first layer (21) and is fixedly connected therewith.

8. Component according to claim 1, characterised in that the second layer (12) has recesses (13, 14) on its outside.

9. Component according to claim 8, characterised in that the second layer (23) has a decorative layer (24) which is formed as a thermo-formed carpet.

10. Component according to claim 1, characterised in that the second layer (12) contains a duroplastic, cross-linked material.

11. Component according to claim 5, characterised in that the material of the second layer (12) that is reinforced with glass fibres has a hardened sheet moulding compound (SMC), preferably based on an unsaturated polyester, epoxy or the like.

12. Component according to claim 10, characterised in that the second layer (32, 34) contains at least one layer of a bound fibrous material (34).

13. Component according to claim 1, characterised in that the second layer (12) consists of vulcanized rubber.

14. Component according to claim 3, characterised in that the fibrous matting of the first layer (11) is formed of synthetic and/or natural fibres which are bound with a duroplastic, cross-linked binder, for example, a phenolic resin, aminoplast resin, melamine resin, epoxy resin or a mixture of the latter.

15. Use of the component according to claim 1 as a dimensionally stable, noise-reducing wall, screening or casing preferably for an automobile.

## Revendications

1. Elément de construction atténuant le bruit avec au moins une première couche (11) à absorption acoustique et à isolation thermique et une seconde couche support (12) amortissant le bruit, deux couches qui sont reliées entre elles par leurs surfaces voisines au moins par zones, caractérisé en ce que la seconde couche (12) est constituée d'un matériau synthétique rigide, imperméable, thermoformée, de sorte que l'élément de construction peut être utilisé sans cadre support ni bord d'appui, la seconde couche (12) étant une plaque massive en un polypropylène contenant une matière de charge minérale, du caoutchouc synthétique vulcanisé avec une matière de charge minérale, ou en un strate de matériau thermodurcissable (32) renforcé par des fibres de verre et un strate de non-tissé melangé thermodurcissable comprimé (34), et la première couche à absorption acoustique et à isolation thermique étant une natte fibreuse thermodéformée,
ou la seconde couche (12) étant une plaque massive en matière plastique thermoformée et la première couche à absorption acoustique et à isolation thermique étant une natte fibreuse poreuse thermodéformée en fibres naturelles.

2. Elément de construction conforme à la revendication 1, caractérisé également par une couche d'adhésif (15) convenant au thermosoudage, disposée entre la première et la seconde couche (11 et 12).

3. Elément de construction conforme à la revendication 1, caractérisé en ce que la première couche (11) est une natte en fibres thermodéformée.

4. Elément de construction conforme à la revendication 1, caractérisé en ce que la seconde couche (12) est un matériau plastique renforcé par des fibres de verre.

5. Elément de construction conforme à la revendication 3, caractérise en ce que la première couche (11) est une natte en fibres de synthèse et/ou naturelles reliée au moins en partie par un liant thermoplastique sous forme de fibres ou de poudre, et en ce que la seconde couche (12) est constituée d'un matériau thermoplastique renforcé par des fibres de verre et de préférence des fibres de verre sans fin, par exemple à base de polypropylène, de polyamide ou de polyester.

6. Elément de construction conforme à la revendication 3, caractérisé en ce que la seconde couche (12) est constituée d'un matériau thermoplastique et d'une matière de charge minérale et présente une densité entre 1,5 et 2,5 kg/l.

7. Elément de construction conforme à la revendication 1, caractérisé en ce que sur la face extérieure de la première couche (21) une couche de décoration (22) poreuse ou microporeuse est disposée et reliée solidement à celle-ci.

8. Elément de construction conforme à la revendication 1, caractérisé en ce que la seconde couche (12) présente sur sa face extérieure des creux (13, 14).

9. Elément de construction conforme à la revendication 8, caractérisé en ce que la seconde couche (23) présente une couche de décoration (24) conçue comme tapis thermoformé.

10. Elément de construction conforme à la revendication 1, caractérisé en ce que la seconde couche (12) contient un matériau thermodurcissable, réticulé.

11. Elément de construction conforme à la revendication 5, caractérisé en ce que le matériau renforcé par des fibres de verre de la seconde couche (12) est un matériau à mouler thermodurcissable en plaque (SMC) durcie, de préférence à base d'un polyester non saturé, d'époxy ou de tout autre matériau comparable.

12. Elément de construction conforme à la revendication 10, caractérisé en ce que la seconde couche (32,34) contient au moins une couche d'un matériau fibreux lié (34).

13. Elément de construction conforme à la revendication 1, caractérisé en ce que la seconde couche (12) est constituée de caoutchouc vulcanisé.

14. Elément de construction conforme à la revendication 3, caractérisé en ce que la natte fibreuse de la première couche (11) est constituée de fibres synthétiques et/ou naturelles, qui sont liées par un liant thermodurcissable, réticulé, par exemple une résine phénolique, une résine d'urée, une résine de mélamine, une résine époxy ou leurs mélanges.

15. Utilisation de l'élément de construction conforme à la revendication 1 comme mur indéformable, mur atténuant le bruit, écran ou blindage, de préférence pour une automobile.
